# EUROPEAN PATENT APPLICATION

(11) **EP 2 930 669 A1**
(43) Date of publication of application: **14.10.2015**
(21) Application number: 14290096.8
(22) Date of filing: 07.04.2014
(51) Int. Cl.: G06Q 10/02, G06Q 50/14

(54) **Media input reservation system**

(71) Applicant: Amadeus S.A.S., 06410 Biot (FR)
(72) Inventor: Habibi, Imam, 06200 Nice (FR); Bensouda, Karim, 06160 Juan Les Pins (FR); Ripert, Loic, 06000 Nice (FR)
(74) Representative: Samson & Partner Patentanwälte mbB

(57) **Abstract**

Methods, systems and computer program products for determining at least one travel recommendation. The travel request that includes an origin and location data that indicates at least one location is received. The location data is analyzed to determine at least one traveling location corresponding to the at least one location indicated by the location data. The at least one travel recommendation is generated. The at least one travel recommendation comprises a travel route including the origin and the at least one traveling location, a determined number of days to stay at the at least one location, and bookable travel inventory items corresponding to the travel route and the determined number of days to stay at the at least one location.

## Description

### BACKGROUND

The invention is generally related to computers and computer software, and in particular to methods, systems, and computer program products for travel planning and reservations.

Computer technology is increasingly used in the travel industry to manage and support travel reservations, as well as data associated therewith. In particular, third party reservation agents, such as travel agents, and/or customers (e.g., travelers) often utilize computer based devices to interface with a travel reservation system, such as a Global Distribution System (GDS), to book travel arrangements and/or travel related services for the customer. When reserving travel related services using such reservation terminals in communication with such travel reservation systems, a travel agent and/or a customer may initiate a reservation session between a client device and the travel reservation system to book one or more travel inventory items corresponding to the travel related services (e.g., flights, hotels, rail transportation, dining reservations, etc.) for the customer during the reservation session.

Because computer technology is utilized to increasingly manage and support travel reservations, a continuing need exists in the art for improved computer based travel planning and reservation systems, as well as improved methods and computer program products, for facilitating travel related service booking.

### SUMMARY

Embodiments of the invention generally comprise methods, systems, and computer program products for generating one or more travel recommendations for a travel request. The travel request may be received at a reservation system, where the travel request includes an origin and location data that indicates at least one location. The reservation system may analyze the location data to determine at least one traveling location corresponding to the at least one location indicated by the location data. At least one travel recommendation for the travel request may be generated. The travel recommendation may comprise a travel route including the origin and the at least one location, a determined number of days to stay at the at least one location, and bookable travel inventory items that correspond to the travel route and the determined number of days to stay at the at least one location.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, one or more inventory systems, and one or more client devices consistent with embodiments of the invention.
FIG. 2 is a block diagram of a reservation system of FIG. 1.
FIG. 3 is a block diagram of a client device of FIG. 1.
FIG. 4 is a flowchart illustrating a sequence of operations that may be performed by the reservation system of FIG. 2 to generate a travel recommendation.
FIG. 5 is a flowchart illustrating a sequence of operations that may be performed by the client device of FIG. 3 to generate a travel request.
FIG. 6 is a flowchart illustrating a sequence of operations that may be performed by the reservation system of FIG. 2 to determine travel inventory items for travel services for a travel recommendation.
FIG. 7 is a diagrammatic view of an exemplary graphical user interface that may be output on a display of a client device and used at the client device to interface with a reservation system to provide user input data to generate a travel request.
FIG. 8 is a block diagram that illustrates clustered locations consistent with some embodiments of the invention.
FIG. 9 is a block diagram of some hardware and software components of the reservation system of FIG. 2 and types of data that may be received and/or input.
FIG. 10 is a diagrammatic view of an exemplary graphical user interface that may be output on a display of a client device and used at the client device to interface with a reservation system to review and/or book a travel recommendation.
FIG. 11 is a diagrammatic view of an exemplary graphical user interface that may be output on a display of a client device and used at the client device to interface with a reservation system to review and/or select accommodations for locations of a travel request.
FIGS. 12A-C pr"ovide diagrammatic views of an exemplary graphical user interface that may be output on a display of a client device and updated during interface with a reservation system to select a location, review points of interest, and review and select accommodation options.
FIG. 13 is a block diagram of some hardware and software components of the reservation system of FIG. 2 and data sources associated therewith.

### DETAILED DESCRIPTION

Embodiments of the invention provide systems, methods, and computer program products for determining one or more travel recommendations for a travel request. Consistent with some embodiments of the invention, a reservation system may receive the travel request that includes location data, where the location data may indicate an origin and/or one or more destination locations. The location data may be determined from geotagged data, address data (such as the address of a contact), text data, and/or calendar data. In general, geotagged data corresponds to any type of data that includes geographical information associated therewith and from which a location may be determined. Geotagged data may include geotagged image data, geotagged video data, and/or other such forms of media data that may be tagged with geographical information. For example, a geotagged image may include data that indicates a geographical location associated with the image. The reservation system may process the travel request to determine one or more locations indicated by the location data.

Based on the determined locations, the reservation system may determine one or more candidate traveling locations. In general, a traveling location generally corresponds to a location at which travel services may be provided (e.g., a rail station, an airport, a ferry station, etc.). Consistent with some embodiments of the invention, the determined locations may be grouped/sorted into one or more clusters of one or more locations based on proximity, common points of interest, types of offered travel services, other such travel characteristics, user preferences, business rules, etc. and one or more candidate traveling locations may be determined for each geographic area. Based on one or more travel characteristics, a traveling location may be determined for one or more of the locations of the travel request from the determined candidate traveling locations. In some embodiments, a traveling location may be determined for each cluster of locations. For example, if a user inputs a plurality of locations in New York City, embodiments of the invention may group the locations into a cluster (corresponding to New York City), and embodiments of the invention may determine John F. Kennedy International Airport as a traveling location corresponding to the travel request.

Consistent with some embodiments of the invention, determining one or more clusters for one or more locations may be based at least in part on user preferences, travel characteristics of the locations, business rules, and/or defined system restrictions. Similarly, determining one or more traveling locations for the one or more clusters may be based at least in part on travel characteristics of the locations and/or geographic area, user preferences, business rules, and/or defined system restrictions. In general, travel characteristics may refer to geographic distance between locations (i.e., proximity), geographic distance between candidate traveling locations, geographic distance between a candidate traveling location and one or more popular points of interest, geographic distance between a candidate traveling location and one or more user defined points of interest, types of travel services offered at a candidate traveling location, travel merchants offering travel services at a candidate traveling location, etc.

Consistent with some embodiments of the invention, the reservation system may determine an optimal travel route from the origin to each traveling location and a number of days to stay at each location of the travel request. A travel route/number of days to stay at a location may be considered the optimal travel route based on user-defined characteristics and/or business-defined characteristics. Such user/business defined characteristics may include, for example, cost, amount of time spent for traveling, yield/revenue, highest rating based on user generated content (e.g., traveler reviews, traveler ratings, etc.). The optimal travel route and number of days to stay may be output to a user as a travel recommendation, and the user may interface with the reservation system to adjust the travel route/number of days to stay at a location to thereby generate additional travel recommendations that may include different travel services.

Furthermore, the system may dynamically adjust the route and/or number of days to stay at each geographic area based at least in part on user preferences, similar user preferences (e.g., such as user preferences determined from community feedback), business rules, reservation data/statistics accumulated by the reservation system (e.g., similar historical reservation information), event calendars, and/or defined system restrictions. A user may be presented with one or more travel recommendations from which to choose, where each travel recommendation may provide a travel route, a number of days to stay at each location, and travel inventory items for travel services (e.g., flight tickets, car rentals, rail travel tickets, accommodations, taxi services, dining reservations, etc.) associated with the travel route and number of days to stay at each location. Moreover, each travel recommendation may facilitate contemporaneous concurrent reservation of the associated travel inventory items.

In general, a received travel request may indicate an origin, one or more locations associated with one or more destinations, desired travel dates, traveler (i.e., user) preferences, and/or other information that may be considered for planning and booking travel services. Based on the origin, the one or more locations associated with one or more destinations, the desired travel dates, and/or user preferences, embodiments of the invention may determine one or more travel recommendations that each comprise a travel route, a number of days to stay in each destination, and bookable travel inventory items for travel services (e.g., flights, car rentals, rail travel, etc.) that correspond to the travel route and determined number of days to stay in each destination. In general, the travel recommendations correspond to the desired travel dates, include desired accommodations and/or services, and correspond to any indicated user preferences.

For example, a user (such as a traveler or a travel agent) may interface with a reservation system using a client device to input an origin and one or more destination locations. The client device may interface with the reservation system via a web interface and/or a dedicated application interface. The user may input data that indicates the origin and one or more destinations via the interface on the client device. The data input by the user may comprise text data (e.g., typing into an input field of the interface), contact data, geotagged data, calendar data, or any combination thereof. The user input data may be processed to determine the origin and one or more locations corresponding to one or more destinations.

For example, the user may input a geotagged image of the Statue of Liberty in New York City, a geotagged image of the Empire State Building in New York City, and a geotagged image of the White House in Washington, D.C. for input fields of the interface that correspond to destinations. Based on the geographic information included with the geotagged images, embodiments of the invention may determine the Statue of Liberty, the Empire State Building, and the White House as locations. Based on the determined locations, embodiments of the invention may cluster the Statute of Liberty and the Empire State building locations in a first geographic area and the White House in a second geographic area. Based on the geographic areas, candidate traveling locations may be determined for each geographic area - for example, John F. Kennedy International Airport in New York City, LaGuardia Airport in New York City, and Pennsylvania Station in New York City may be the determined candidate traveling locations for the first geographic area; and Ronald Regan National Airport in Arlington County, Virginia and Union Station in Washington, D.C. may be the determined candidate traveling locations for the second geographic area.

Continuing the example, the geotagged images indicate user defined points of interest (i.e., the Statue of Liberty, the Empire State Building, and the White House). The system may also maintain and and/or receive information about popular points of interest, where popular points of interest may be determined based on traveler-generated content, such as traveler reviews, traveler ratings, expert recommendation system data, and/or social media information, etc. Based on travel characteristics of each candidate traveling location (e.g., distance between each candidate traveling location, types of travel services offered at each candidate traveling location, travel merchants providing service at each candidate traveling location, distance from each candidate traveling location to popular points of interest in the geographic area, distance from each traveling location to user defined points of interest, etc.), user preferences, business rules/preferences, and/or system restrictions, the reservation system may determine a traveling location for each geographic area based upon the candidate traveling locations.

For example, if a user preference indicates that the traveler prefers rail travel for a travel duration under eight hours, the reservation system may identify or determine Pennsylvania Station and Union Station as traveling locations. As another example, if a business rule of the reservation system prefers a particular travel merchant, and, according to travel characteristics of the candidate traveling locations, the particular travel merchant offers travel services at Ronald Regan Airport and John F. Kennedy International Airport, the reservation system may identify or determine the Ronald Regan Airport and John F. Kennedy International Airport as traveling locations.

Continuing the example, if the user input data indicates an origin of Chicago, the reservation system may determine, using the determined traveling locations, one or more travel routes that start in Chicago and travel to the first geographic area and the second geographic area. Furthermore, the reservation system may determine a number of days to stay in each of the first and second geographic areas for each travel route. Based on the determined travel routes and number of days to stay at the one or more destinations, the reservation system may determine travel inventory items for travel services that correspond to each determined travel route and number of days to stay at each destination, where the travel route, determined number of days to stay at each destination, and determined travel inventory items may be returned to the user at the client device as a travel recommendation.

With reference to the example, a travel recommendation may include a flight from Chicago O'Hare International Airport to Regan National Airport, hotel accommodations for two days in Washington, D.C. near the White House, a flight from Regan National Airport to John F. Kennedy International Airport, hotel accommodations for two days in New York City near the Statue of Liberty and the Empire State Building, and a flight from John F. Kennedy International Airport to Chicago O'Hare International Airport. The user may concurrently reserve some or all of the travel inventory items included in the travel recommendation.

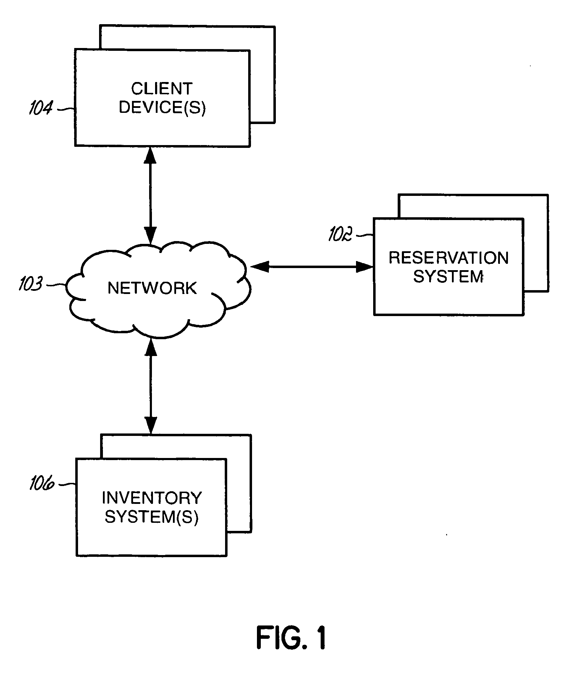

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A client device 104 may be connected to the communication network 103, such that a customer or reservation agent (e.g., travel agency or other such travel reservation service) may initialize a travel planning and reservation session with the reservation system 102 to communicate a travel request and/or other such relevant data to the reservation system 102. The client device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent or customer (i.e., a traveler) may interface with the reservation system 102 using the client device 104 in a travel planning and reservation session to provide data for a travel request. In turn, the reservation system may interface with each inventory system 106 of each travel merchant that provides a travel inventory item that generally requires an availability determination (e.g., a flight, rail ticket, hotel room, event ticket, etc.) to determine availability for each travel inventory item requiring an availability determination for the booking request. In addition, consistent with some embodiments of the invention, some inventory systems 106 may manage booking of services that do not require an availability determination, such as a restaurant reservation, a taxi service, a non-limited availability event/location admission ticket, etc. Moreover, while the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and inventory system 106 may be components of a global distribution system (GDS).

As will be described in detail below, consistent with embodiments of the invention, an interface may be generated by the reservation system such that a user (i.e., a traveler or a travel agent) may input information that may be utilized to generate a travel request that may in turn be used to determine one or more travel recommendations consistent with embodiments of the invention. In general, such interface may be accessible via a client device 104, such as a personal computer, a portable electronic device (e.g., a smart phone, a tablet, a laptop, etc.), or a terminal configured to interface with a server providing such interface. Consistent with these embodiments, a user may input an origin, data that indicates locations associated with one or more destinations, desired travel dates, and/or one or more user preferences. Some user input data may comprise text data, calendar data, address/contact data, geotagged data, and/or other such types of data from which a geographical location may be determined. Based on the input information, a travel request may be generated, and one or more travel recommendations may be dynamically determined based on the content of the travel request.

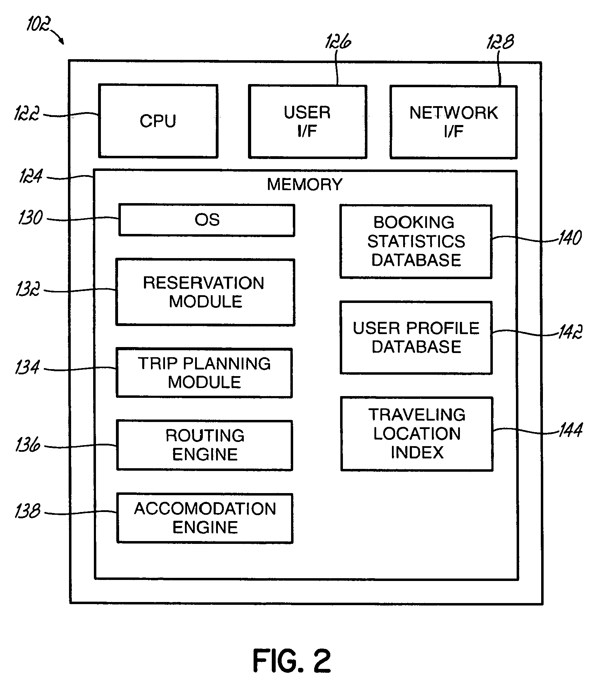

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of the reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 126 incorporating one or more user input/output devices, e.g., a keyboard, a pointing device, a display, a printer, etc. Otherwise, data may be communicated to and from another computer or terminal (e.g., the client device 104, the inventory system 106, etc.) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132, a trip planning module 134, a routing engine 136, and/or an accommodation engine 138. In general, the reservation module 132 may be configured to interface with one or more travel merchant systems (e.g., inventory systems 106) to reserve travel inventory items for travel services based on received data.

The trip planning module 134 may be configured to analyze a received travel request and to determine one or more travel recommendations for the travel request. The routing engine 136 may be configured to receive one or more traveling locations associated with the travel request and travel dates indicated by the travel request. The routing engine 136 may compute one or more travel routes that start at an origin traveling location and pass through each traveling location determined for destinations. The routing engine 136 may determine the optimal travel route based at least in part on booking statistics, expert recommendation system input, user preferences, and/or travel characteristics associated with the traveling locations. In general, booking statistics may be maintained by the reservation system 102 for travel services previously booked through the reservation system 102. Furthermore, expert recommendation system input generally refers to data that may be received by the reservation system 102 and/or maintained by the reservation system that returns recommended routings between locations based on user generated feedback content, such as reviews for trips, reviews for locations, social network data, etc. Moreover, travel characteristics may include, but are not limited to, proximity (e.g., geographical distance), types of travel services offered, etc.

The accommodation engine 138 may be configured to determine a number of days to stay at each destination determined form the locations of indicated in the travel request. In general, the accommodation engine 138 may determine the number of days to stay in the destinations based at least in part on an expert recommendation system data, calendar data, booking statistics, and/or user preferences. As discussed above, expert recommendation system data generally refers to data that may be received may received and/or maintained that is based on user generated feedback content, such as reviews, social network data, social network statistics, etc. Calendar data generally refers to data that may be maintained or received that indicates real-time events worldwide and/or for the locations on the desired travel dates. Furthermore, the reservation system 102 may maintain statistical data (i.e., booking statistics) based on travel services previously booked with the reservation system 102.

The memory 124 of the travel and reservation system 102 may generally store one or more databases including, for example, a booking statistics database 140, a user profile database 142, and a traveling location index 144. The databases 140, 142 may comprise data and supporting data structures that store and organize the data. In particular, the databases 140, 142 may be arranged with any database organization and/or structure including, but not limited to, a relational database, a hierarchical database, a network database, and/or combinations thereof. A database management system in the form of a computer software application executing as instructions on a processing unit of the reservation system 102 may be used to access the information or data stored in records of the databases 140, 142 in response to a query, where a query may be dynamically determined and executed by the operating system 130, other applications, and/or one or more modules and/or engines 132-138.

In general, the booking statistics database 140 may store data derived from travel services previously booked with the reservation system 102. For example, the booking statistics database may store data associated with booked travel inventory items of the travel services, customer information (including, for example, demographical information), transactional information, locations associated with the booked travel inventory items, and/or other such types of data that may be analyzed by the routing engine 136 and/or accommodation engine 138 when determining an optimal route for a travel request or a number of days to stay at one or more locations for the travel request.

The user profile database 142 may store one or more user profiles, where each user profile may correspond to a travel customer of the reservation system (i.e., a traveler/user). Generally, each user profile may correspond to a travel customer that has created an account to store information associated with the travel customer. A user profile may store contact information for the travel customer (e.g., an email address, a mobile telephone number, etc.), payment information for the travel customer, information included in a passenger name record, preferences of the traveler, and/or other such information. For example, the user profile may indicate that a customer prefers a particular type or chain of hotel, a particular airline, a particular rental car company, etc. In some embodiments of the invention, a travel request may include information that identifies a particular user profile. In these embodiments, the trip planning module 134, routing engine 136, and/or accommodation engine 138 may access the user profile database 142 such that the one or more determined travel recommendations may be based at least in part on preferences of the user.

The traveling location index 144 may store traveling locations and geographical information/travel characteristics associated with the traveling locations. For example, the traveling location index 144 may store location information for each airport in a geographical area, such as a city, country, etc. Consistent with embodiments of the invention, the trip planning module 134 may search the traveling location index 144 based on locations received in a travel request to determine one or more candidate traveling locations for the travel request.

Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 and/or modules of the reservation system 102 may be implemented in one or more servers. Consistent with embodiments of the invention, the modules and/or engines 132-138 and/or other such modules, applications, and/or engines may be executing on one or more servers of the reservation system 102, and the modules and/or engines 132-138 may cause the processor 122 of the reservation system 102 to perform operations consistent with embodiments of the invention.

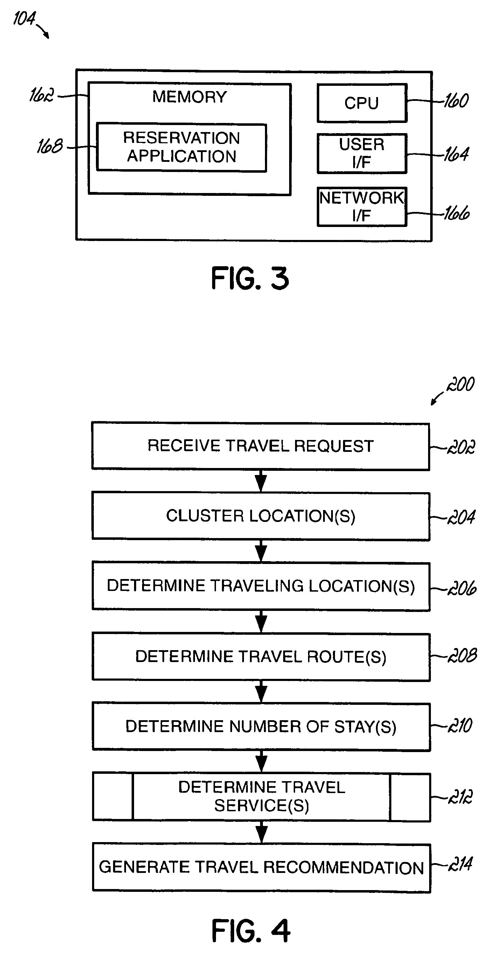

FIG. 3 provides a block diagram that illustrates the components of the client device 104 consistent with embodiments of the invention. The client device 104 includes at least one processor 160 including at least one hardware-based microprocessor and a memory 162 coupled to the at least one processor 160. The memory 162 may represent the random access memory (RAM) devices comprising the main storage of the client device 104, as well as any supplemental levels of memory, e.g., cache memories, non-volatile or backup memories (e.g., programmable or flash memories), read-only memories, etc. In addition, memory 162 may be considered to include memory storage physically located elsewhere in the client device 104, e.g., any cache memory in a microprocessor, as well as any storage capacity used as a virtual memory, e.g., as stored on a mass storage device or on another computer coupled to the client device 104. As described above with respect to the reservation system 102 of FIG. 2, the client device 104 may include a user interface 164 for interface with a user or operator (e.g., a travel agent) and a network interface 166 for communication over the communication network 103.

The client device 104 typically operates under the control of an operating system and/or application and executes or otherwise relies upon various computer software applications, components, programs, objects, modules, data structures, etc., including for example, a reservation application 168. The reservation application 168 may be executed by the processor 160 of the client device 104 to interface with an operator (e.g., a travel agent) via the user interface 164 such that data may be input for generating a travel request. The reservation application 168 may cause the input data of the travel request to be communicated to the reservation system 102, such that one or more travel recommendations may be determined and subsequently returned to the client device 104. As such, in general, the reservation application 168 executes on the client device 104 to generate a front end through which a user (e.g., a traveler or a travel agent) may interface with the reservation system 102 to provide information for a travel request, review travel recommendations determined by the reservation system 102, and book the travel inventory items of a selected travel recommendation. In some embodiments, the reservation application 168 may comprise an Internet browser that may be directed to an Internet address associated with a web interface of the reservation system 102 that is displayed to the user in the browser. In some embodiments, the reservation application 168 may be configured to generate an interface (e.g., a graphical user interface) on the client device 104 that is configured to communicate data between the reservation system 102 and the client device 104.

FIG. 4 provides a flowchart 200 that illustrates a sequence of operations that may be performed by the reservation system 102 consistent with embodiments of the invention to determine one or more travel recommendations for a travel request. A travel recommendation generally comprises one or more bookable travel inventory items for travel services that fulfill the travel request. Moreover, a travel recommendation may be considered to include a dynamically-determined travel route and a dynamically-determined number of days to stay at each location of the travel request.

The reservation system 102 may receive a travel request 104 from a client device 104 (block 202), where the travel request may indicate desired travel dates (e.g., a departure date and a return date, trip duration, etc.), an origin, and one or more locations that correspond to one or more destinations. Consistent with some embodiments of the invention, the travel request may include location data for the origin and the one or more locations that were determined from input text data, address data (e.g., contact data), calendar data, and/or geotagged data. In addition, in some embodiments, the location data corresponding to one or more origins may indicate one or more user defined points of interest (POI) (e.g., an address of a contact provided as user input when generating the travel request). The reservation system 102 may sort and/or group the indicated locations into one or more clusters (block 204). In general, the reservation system 102 may sort the locations into clusters based at least in part on travel characteristics (e.g., proximity, distance to points of interest, whether the locations are in the same country, types of transportation offered between locations, etc.), business rules, and/or user preferences.

The reservation system 102 may determine one or more traveling locations associated with the locations indicated by the travel request (block 206). In general, a traveling location corresponds to a location at which travel services are provided (e.g., an airport, a rail station, a bus station, etc.). Consistent with embodiments of the invention, the reservation system 102 may maintain a traveling location index 144, which may store information for a plurality of traveling locations. The reservation system 102 may access the traveling location index to determine candidate traveling locations for the travel request, as described herein. For example, the traveling location index 144 may store information about airports, rail stations, bus stations, etc. The types of information stored by the traveling location index 144 may include, for example, the geographic location of a traveling location, types of travel services offered at the traveling location, travel merchants that offer travel services at the traveling location, and/or other such information and/or travel characteristics that may be relevant when planning a travel route through traveling locations. Based on travel characteristics, business rules, system restrictions, and/or user preferences, the reservation system may identify or determine the one or more traveling locations for the travel request from the candidate traveling locations. Therefore, in some embodiments, the reservation system 102 may determine the locations from the travel request, determine one or more clusters of locations, determine one or more candidate traveling locations for each cluster, and determine a specific traveling location for each cluster from the candidate traveling locations of the cluster.

The determination of a traveling location for a travel request may be based at least in part on system restrictions associated with the travel request. For example, the reservation system 102 may limit traveling locations determined for a travel request to a specific country, geographic region, etc. In some embodiments, the traveling locations may be determined based, at least in part, on the geographic areas determined by clustering the locations of the travel request, such that a traveling location may be determined for each geographic area.

Furthermore, when determining traveling locations, the reservation system may determine a traveling location based at least in part on user preferences. For example, if a user profile indicates that the user (i.e., the traveler) prefers rail travel, embodiments of the invention may select a rail station as the traveling location instead of a candidate traveling location corresponding to an airport. In some embodiments of the invention, if 'N' corresponds to the number of locations determined from the travel request associated with destinations, 'M' may correspond to the number of clusters determined by sorting/grouping the locations of the travel request, and 'O' may correspond to the number of determined traveling locations, the reservation system 102 may determine clusters of locations and traveling locations such that: O ≤ M ≤ N.

The traveling locations may be determined based at least in part on one or more business rules. For example, if the reservation system 102 is associated with one or more travel merchants, or prefers one or more travel merchants (possibly due to advantageous business agreements), embodiments of the invention may determine traveling locations from a plurality of candidate traveling locations based on whether the associated travel merchants offer travel services at each candidate traveling location. Similarly, a business rule of the reservation system 102 may indicate preferences for types of travel (e.g., rail travel preferred over air travel).

Based on the determined traveling locations and a travel date range (i.e., desired travel dates) indicated in the travel request, the reservation system 102 may determine one or more travel routes that begin at the origin and that pass through each traveling location (block 208). In general, the routing engine 136 of the reservation system 102 may determine the one or more travel routes. Consistent with some embodiments of the invention, the reservation system 102 may determine an optimal travel route. In general, the reservation system 102 may determine the one or more travel routes based at least in part on data provided by an expert recommendation system, booking and/or reservation statistics derived from travel services previously booked with the reservation system 102, and/or travel characteristics.

The expert recommendation system may be incorporated in the reservation system 102 and/or may be provided by a third party data source to the reservation system 102. Generally, the reservation system 102 may receive data corresponding to the origin and one or more traveling locations that indicates recommended location pairings (e.g., the determined best routings between two locations), where such recommended location pairings may be based on data analytics associated with traveler feedback data (e.g., traveler reviews, traveler ratings, etc.), analysis of travel services provided between the locations, collected data from travel merchants, and/or other such types of analytical data that may be utilized to determine routings between locations. For example, if many traveler reviews poorly rate travel services provided between a first location and a second location, embodiments of the invention may determine a travel route that avoids routing from the first location directly to the second location. In this example, instead, the routing engine 136 of the reservation system 102 may determine an indirect travel route that comprises travel from the first location to an intermediate third location and then travel from the third location to the second location.

The reservation system 102 may analyze booking/reservation statistics to determine common routings between traveling locations associated with the travel request, low cost routings between the locations, and/or routings for which travel services are commonly offered. For example, booking/reservation statistics may indicate average fares for travel services between the traveling locations, and in some embodiments of the invention, the routing engine may determine at least a portion of a travel route based at least in part on the average fares. In general, the travel characteristics of traveling locations may comprise distance between the different locations (e.g., proximity), distance to points of interest, types of travel services offered at each traveling location, travel merchants offering services at each traveling location, etc. For example, if two traveling locations are within a given distance of each other (i.e., in relatively close proximity compared to other traveling locations), the routing engine 136 may determine a travel route that includes a routing between the two proximate traveling locations. Similarly, if low-cost travel services are offered between two traveling locations, the routing engine 136 may determine a travel route that includes a routing between the two traveling locations such that the benefit of the low-cost travel services may be realized.

Based on the determined travel route and the travel date range indicated in the travel request, the reservation system may determine a number of days to stay at each location (block 210). Consistent with embodiments of the invention, the accommodation engine 138 of the reservation system 102 may determine the number of days to stay at each location based at least in part on data provided by an expert recommendation system, calendar data, booking/reservation statistics, and/or user preferences. As discussed above, the expert recommendation system may determine recommendations based at least in part on feedback data (e.g., traveler reviews, traveler ratings, etc.). In the context of determining a number of days to stay in each location, the accommodation engine 138 may determine the number of days to stay at each location based on the recommendations provided by the expert recommendation system. For example, if traveler reviews for a particular location are very positive relative to other locations indicated by the travel request, the accommodation engine 138 may determine a higher number of days to stay at the particular location. Similarly, if a particular location includes highly rated points of interest (e.g., attractions, events, etc.), the accommodation engine 138 may determine a higher number of days to stay at the particular location.

Calendar data generally refers to data that indicates news and planned events worldwide, including data associated with locations indicated in the travel request. Accordingly, the accommodation engine 138 may determine a number of days to stay at locations based on planned events that may be of interest for a traveler. Moreover, the accommodation engine 138 may determine a number of days to stay at a particular location based on interesting events occurring at other locations of the travel request. In addition, the accommodation engine 138 may determine a number of days to stay at a particular location to avoid some events that may not be of interest to a traveler, but that may instead increase the cost of travel services. For example, if the calendar data indicates that a large conference is occurring at a particular location on two specified dates, the accommodation engine may determine a number of days to stay at the particular location such that a traveler not attending the large conference will not be at the particular location during the two specified dates. In general, calendar data may be maintained by the reservation system 102 and/or received from a third-party data source.

As discussed previously, booking/reservation data may be maintained by the reservation system 102 for previously-booked travel services. Consistent with some embodiments of the invention, the accommodation engine 138 may determine a number of days to stay at each location based at least in part on the booking/reservation data. For example, statistics based on booking/reservation data may be analyzed to determine a number of days to stay in each location. For example, a number of days to stay in each location may be determined based at least in part on an average price for accommodations in each location. Similarly, a number of days to stay in each location may be determined based at least in part on an average number of days that other travelers have stayed in each location.

Furthermore, the number of days to stay in each location may be determined based at least in part on user preferences of the customer (i.e., traveler) associated with the travel request. In some embodiments, preferences of a traveler may be stored in a user profile database 142, and the accommodation engine 138 may take such preferences into consideration when determining a number of days to stay in each location. For example, the user profile may indicate a preferred type of travel, a preferred travel merchant, etc. In addition, the user profile may indicate general information about the traveler that may be used to determine preferences associated with the traveler. For example, if the traveler is within a particular age group, the accommodation engine may determine a number of days to stay in each location based on points of interest in the locations that are generally of interest to travelers of the particular age range. Similarly, if the user profile indicates a type associated with the traveler (e.g., business, leisure, family travel, etc.), the accommodation engine 138 may determine the number of days to stay in each location based on the type associated with the traveler. For example, a business traveler is less likely than a leisure traveler to prefer to stay in a location with an upcoming popular event.

While the reservation system 102 may maintain a user profile database 142 associated with some travelers, in some embodiments of the invention, the reservation system 102 may be configured to interface with a third party information source (e.g., social network, employment database, etc.) that maintains information for a user. In such embodiments, the reservation system 102 may provide a field in the interface with the client device 104 in which the user may input information (e.g., a user name, password, employee identification number, user profile resource location identifier, etc.) that links and allows the reservation system 102 to access such third party information sources. Therefore, consistent with some embodiments of the invention, user preferences may be specified in a user profile associated with the user (i.e., customer/traveler) maintained by the reservation system 102. In some embodiments, user preferences may be determined by the reservation system based on information associated with the user received from third party data sources.

Based on the one or more travel routes and the number of days to stay in each location, the reservation system may determine travel services relevant to the travel routes and accommodations (block 212). In general, travel services may refer to flights, rail travel, car rentals, hotel accommodations, bus travel, etc. A travel inventory item generally refers to an inventory-managed item that may be booked and/or reserved for such travel services. For example, a travel inventory item for a flight is a ticket for the flight that reserves a seat for a traveler. Therefore, in the context of determining travel services for the one or more travel routes and one or more accommodations, the reservation system 102 determines travel services that correspond to the travel route and the number of days to stay at each location. Based on the determined travel services, the reservation system 102 generates one or more travel recommendations (block 214), where each travel recommendation includes travel inventory items for the determined travel services that may be booked for the travel request. The one or more determined travel recommendations may be output to the client device 104 for review by the user. The user may concurrently book some or all of the travel inventory items of a travel recommendation to thereby book travel services needed to fulfill the travel request.

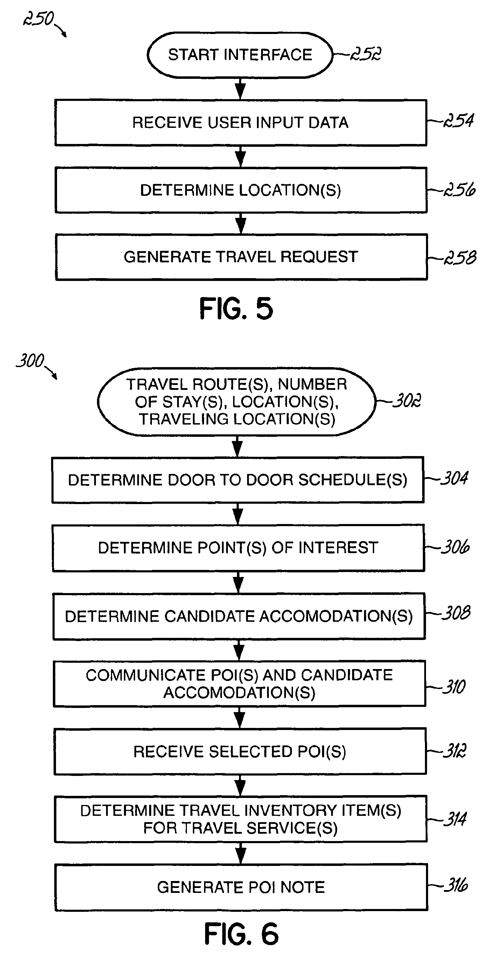

Turning now to FIG. 5, this figure provides a flowchart 250 that illustrates a sequence of operations that may be performed by a client device 104 consistent with embodiments of the invention to generate a travel request. As discussed, the client device 104 may interface with the reservation system 102 via a dedicated application interface or via a web-based interface using an Internet browser that is directed to an interface provided by the reservation system 102. The client device 104 may start the interface (block 252) to thereby interface with the reservation system 102. User input data may be received at the interface (block 254), where such user input data may comprise one or more types of data. For example, user input data may comprise text data input into one or more provided fields of the interface. User input data may further comprise geotagged data, including for example, geotagged images, geotagged multimedia data, etc. Furthermore, the user input data may comprise contact data (e.g., contact data received from a smartphone or other computing device, contact data loaded from a personal computing device, etc.). In addition, the user input data may comprise calendar data (e.g., calendar data received from a smartphone or other computing device).

The client device 104 may analyze the user input data to determine one or more locations indicated by the user input data (block 256). For example, geotagged data may include geographical information in the form of geographic coordinates, and the client device may determine a location (e.g., a city and country) from the geographic coordinates. Similarly, contact data may include an address for a contact (e.g., street address, city, country, etc.), and the client device may determine a location for use with the reservation system 102 from the address. Based on the determined locations, the client device 104 interfacing with the reservation system 102 may generate a travel request (block 258), which may be communicated to the reservation system 102.

FIG. 6 provides a flowchart 300 that illustrates a sequence of operations that may be performed by the reservation system 102 to determine travel services for a travel recommendation responsive to receiving a travel request from the client device 104. As discussed previously, the reservation system may determine one or more travel routes, the number of days to stay in each location, locations indicated in the travel request, and one or more traveling locations determined for the travel request (block 302). The reservation system may determine a door-to-door schedule that comprises each location of the travel request (block 304), where the door-to-door schedule generally corresponds to a complete schedule of days and travel between each location of the travel request. In general, the travel of the door-to-door schedule will utilize the traveling locations determined for the travel request. The reservation system will determine one or more points of interest for each location of the travel request (block 306) based on the door-to-door schedule. Points of interest generally correspond to popular attractions (e.g., museums, entertainment attractions, historical/significant sites, event areas, etc.) and/or user defined points of interest (such as an address of a contact that the user provided as input when generating the travel request). Furthermore, when determining points of interest for each location, the reservation system 102 may determine the points of interest based on popularity with other travelers (e.g., based on traveler reviews, traveler ratings, etc.). Based on the determined points of interest, the reservation system may identify hotels or other accommodation options proximate each point of interest, where such identified hotel/accommodation options may be considered candidate accommodations (block 308).

The determined points of interest may be communicated to the client device 104 (block 310) such that the user may select one or more points of interest via the interface, and the reservation system 102 may receive the selected points of interest from the client device 104 (block 312). Based on the selected points of interest received from the client device 104, the reservation system 102 may determine one or more travel inventory items for travel services (block 314). In general, the selected points of interest may be used by the reservation system 102 to determine which accommodation options to present to the user for booking. Based on the selected points of interest, a nearby hotel accommodation may be determined for a travel recommendation. Furthermore, in some embodiments, a point of interest note may be generated (block 316) that includes information, such as an address, hours of operation, applicable fees, etc. for each selected point of interest. The point of interest note may be communicated to the client device 104 such that the traveler may have access to information about one or more of the selected points of interest.

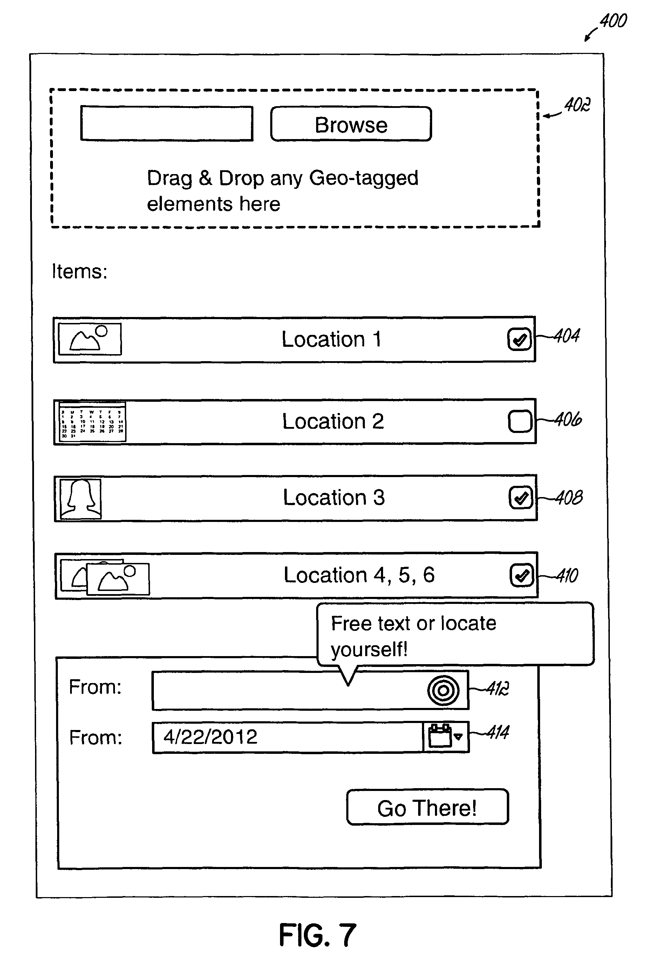

FIG. 7 provides an example illustration of a graphical user interface 400 that may be generated by the reservation system 102 and accessible by a client device 104 such that a user (e.g., traveler, travel agent, etc.) may input information via the graphical user interface 400 for generating a travel request. In general, the client device 104 may access the graphical user interface 400 via the communication network 103, such as by navigating to an internet address at which the reservation server 102 provides the graphical user interface 400. As another example, the graphical user interface 400 may be a dedicated interface between a client device 104 and the reservation system 102 facilitated by a special purpose application that may be executed on the client device 104. As shown, the graphical user interface 400 may allow a user to input data (i.e., user input data), including for example, by dragging and dropping geotagged data and/or other types of data into an interactive input field 402. The various types of data may comprise geotagged images, geotagged video, calendar data, text data, contact data, etc.

Based on the user input data, the interface may update one or more location fields 404, 406, 408, 410 with locations determined from the user input data. The user may select locations to be used in the travel request by selecting each location field 404-410 displaying a desired location. In addition, the graphical user interface 400 may include an origin input field 412 into which a user may input data indicating an origin location. For example, a user may input global positioning system (GPS) data from a smart phone configured with GPS capability. As another example, a user may input location data from an internet browser that determines location based at least in part on a public Internet protocol (IP) address associated with the client device 104. Furthermore, the user may input an origin location by inputting textual data into the origin input field 412. The graphical user interface 400 may further include a date input field 414 such that the user may indicate the desired travel dates (e.g., a departure and return date). In some embodiments, desired travel dates may be provided by calendar data input by the user, where the data may be analyzed by the client device 104 executing the reservation application 168 to determine the desired travel dates.

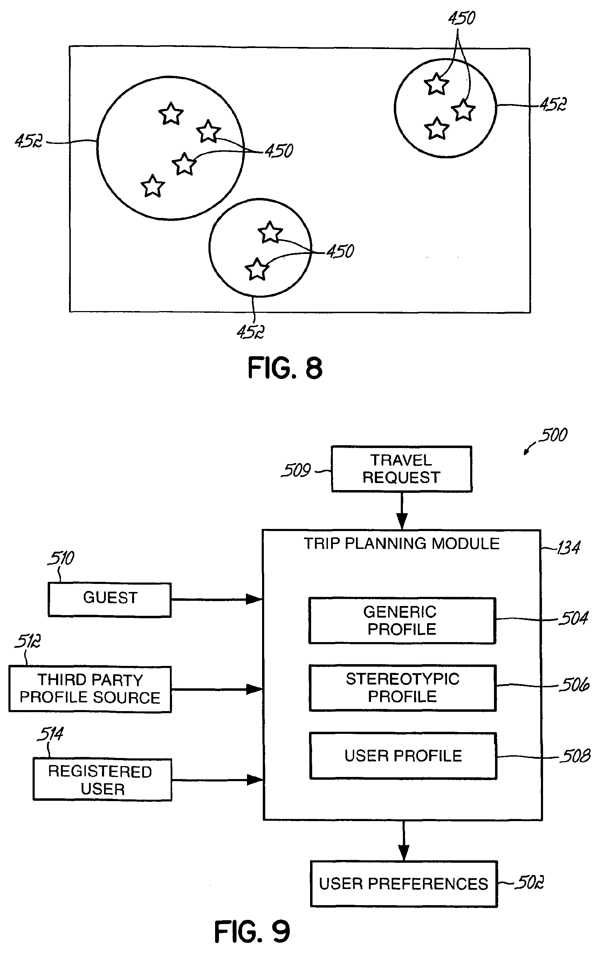

FIG. 8 provides a block diagram that illustrates an example of locations 450 clustered into geographic areas 452. As discussed previously, clustering the locations 450 may be based at least in part on travel characteristics of each location 450, such as geographic distance between locations 450.

FIG. 9 provides a block diagram 500 that illustrates the determination of user preferences consistent with embodiments of the invention. As shown, user preferences 502 may be determined by the trip planning module 134 based at least in part on a generic profile 504, a stereotypic profile 506, and/or a user profile 508 (stored in the user profile database 142) where the application of data from one or more of the profiles 504-508 is based at least in part on information included in a travel request 509. In general, a generic profile 504 may be utilized to determine user preferences 502 when a guest 510 submits the travel request 509. The generic profile 504 may include preference data that is determined based at least in part on booking/reservation statistics maintained by the reservation system 102. Furthermore, the generic profile 504 may include preference data that is determined based at least in part on expert recommendation system data, where such data may include recommendations that are based at least in part on user generated content, such as traveler reviews, traveler ratings, etc.

The stereotypic profile 506 may include preference data that may be used to determine preferences of a user based on demographic and/or profiling information of a user received from a third party profile source 512. A third party profile source 512 may correspond to a social networking website, an employee database, and/or other such data sources from which demographic and/or preference data for a user may be derived. The stereotypic profile 506 may be developed and maintained based at least in part on booking statistics and/or data received from a third party source, such as an expert recommendation system. Therefore, the trip planning module 134 may utilize data from a stereotypic profile 506 if a user submits information in a travel request (e.g., a username, a password, a unique identifier, etc.) that the reservation system 102 may use to access the third party profile source to determine user preferences 502. The user profile 508 generally corresponds to a registered user 514 for which a user profile 508 may be maintained by the reservation system 102. As shown, based at least in part on the information provided in the travel request 509 data from one or more of the profiles 504-508 may be used in determining the user preferences 502.

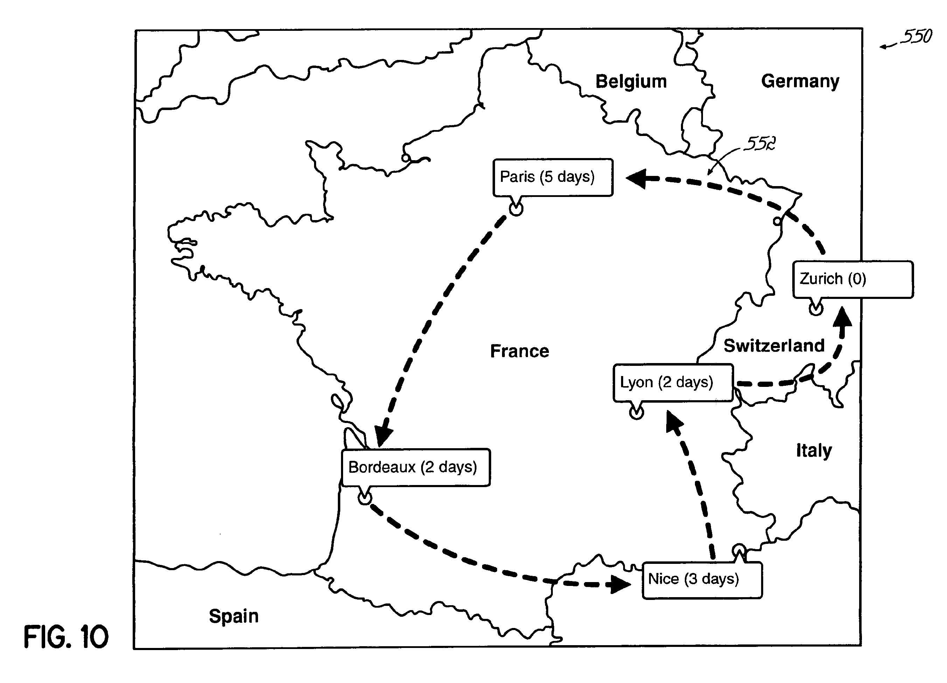

FIG. 10 provides an example graphical user interface 550 that may be generated by the reservation system 102 and accessible by a client device 104 such that a user (e.g., traveler, travel agent, etc.) may review a travel recommendation for booking. In addition, the user may interface with the reservation system 102 via the graphical user interface 550 to modify a travel recommendation. As shown in this example, the graphical user interface illustrates a travel recommendation 552 on a map graphic with accommodation information for destinations and dashed lines for travel. In the example, the travel recommendation comprises: an origin of Zurich (denoted with an 'O'); a first destination of Paris, where the traveler may stay for five days; a second destination of Bordeaux, where the traveler may stay for 2 days; a third destination of Nice, where the traveler may stay for 3 days; and a fourth destination of Lyon, where the traveler may stay for 2 days before returning to the origin. The user may interface with the graphical user interface 552 to adjust the number of days to stay in each location and/or to adjust the travel route. In response to each user input that changes the travel recommendation, the reservation system may determine relevant travel services and may price relevant travel inventory items. When the user approves the travel recommendation, the user may contemporaneously book some or all of the relevant travel inventory items via the reservation system 102. Therefore, as illustrated consistent with some embodiments of the invention, the reservation system 102 generates a graphical user interface that illustrates the determined travel recommendation for user review.

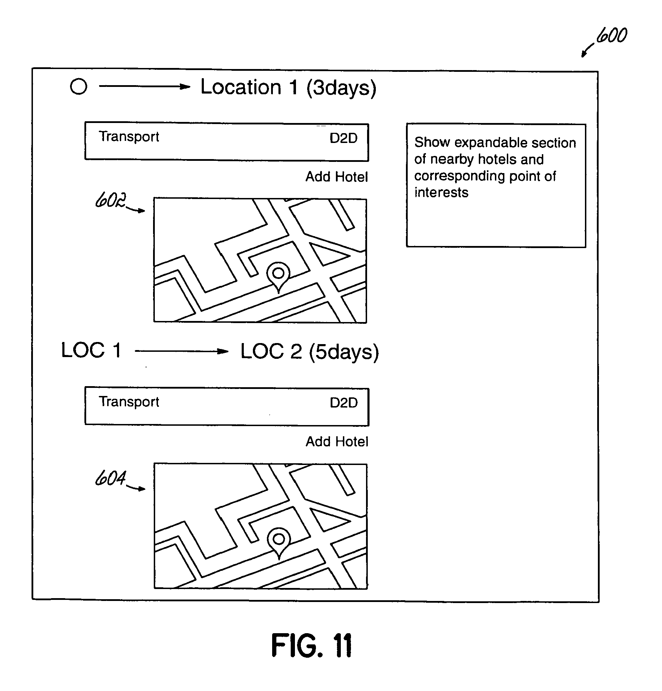

FIG. 11 provides an example graphical user interface 600 that may be generated by the reservation system 102 and accessible by a client device 104 such that a user (e.g., traveler, travel agent, etc.) may review points of interest and accommodation options for each location. As shown, the reservation system 102 may output, via the graphical user interface 600, a map graphic 602 that indicates a location of a travel request on the map graphic 602 as well as accommodation information (i.e., number of days to stay at each location). In addition, the graphical user interface 600 may include indications of points of interest at each location and available accommodations proximate each point of interest. For each location, the user may select, via the graphical user interface 600, a point of interest and the graphical user interface may be updated to display accommodation options proximate the point of interest.

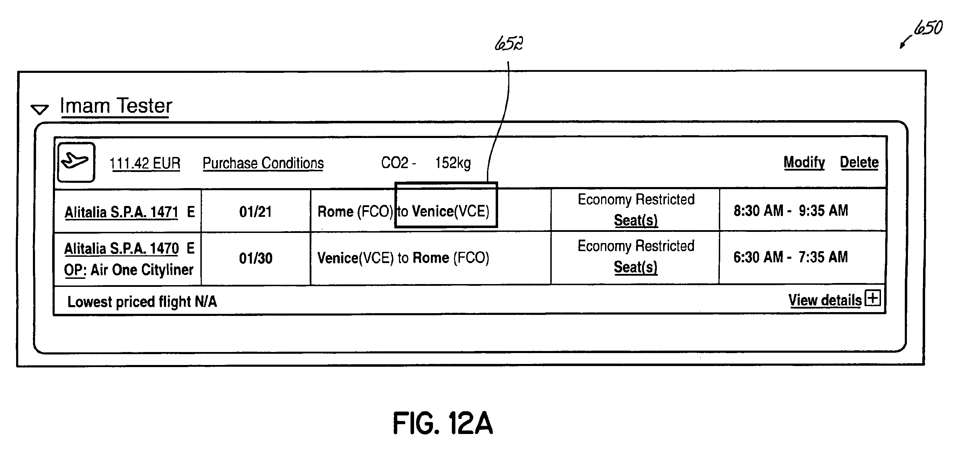

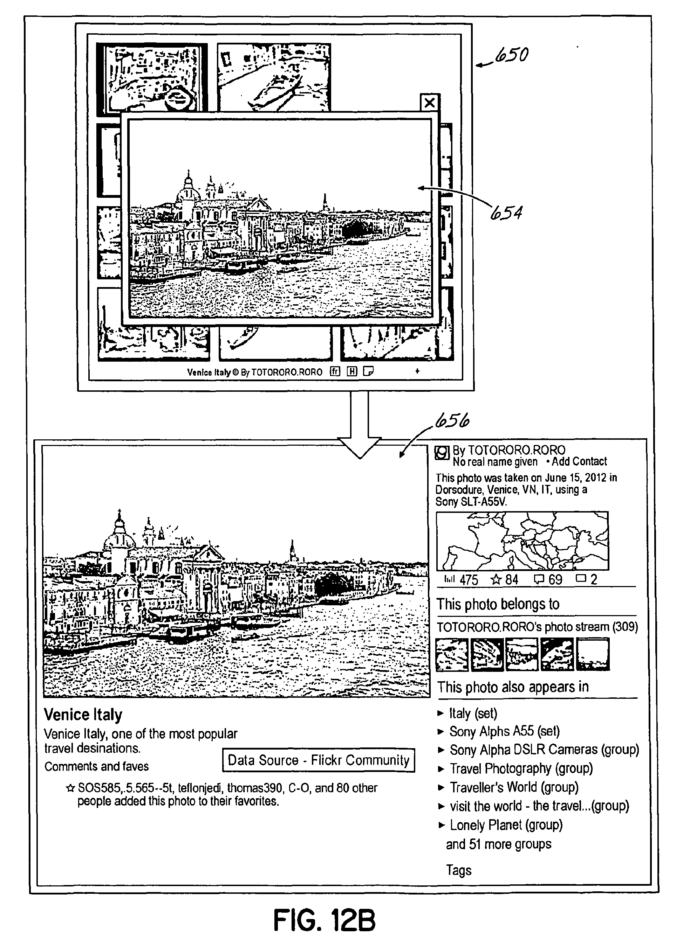

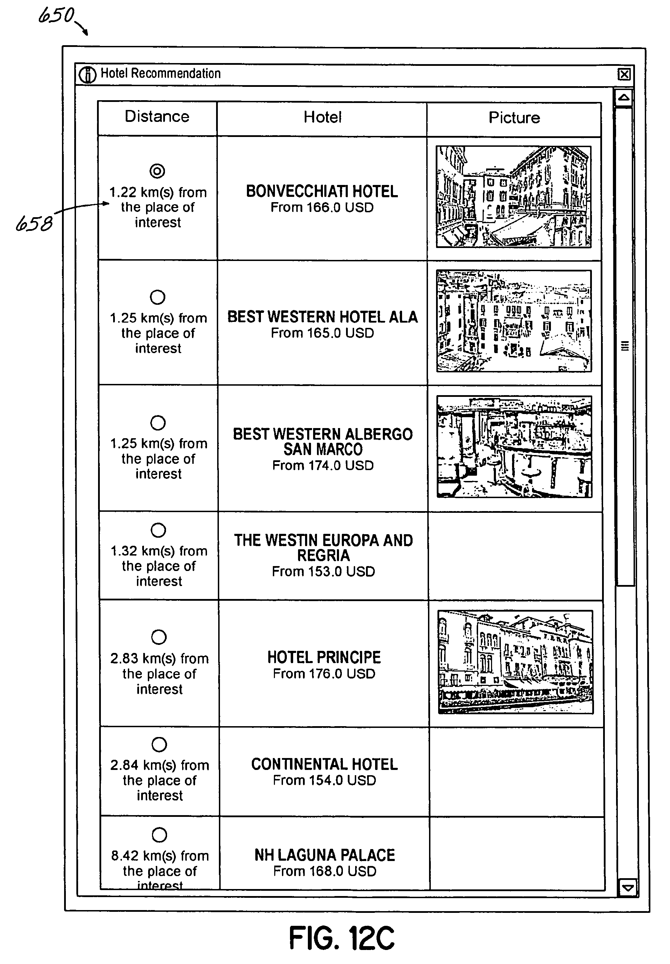

FIGS. 12A-C provide an example graphical user interface 650 that may be generated and updated by the reservation system 102 and accessible by a client device 104 such that a user may review points of interest for a location and select an accommodation option near a desired point of interest, where the reservation system 102 may update the graphical user interface 650 responsive to user input at the client device 104. As shown in FIG. 12A, the graphical user interface 650 may provide a travel schedule that includes travel inventory items for travel services from Rome to Venice and from Venice back to Rome, hence Venice is the destination. The user may review points of interest and/or accommodation options for Venice by selecting an interactive field for the destination (in this example Venice) 652. The graphical user interface 650 may be updated in response to the user selecting the interactive field for the destination 652 in FIG. 12A to output images of one or more points of interest 654, as shown in FIG. 12B. The user may select an image of a point of interest in the graphical user interface 650, and in response to the selection, the graphical user interface 652 may be updated to display detailed information 656 about the selected image and/or point of interest. From the detailed information display 656, the user may select to view accommodation options proximate the selected point of interest, and in response to such selection, the graphical user interface 650 may be updated to graphically display accommodation options 658 near the selected point of interest, as shown in FIG. 12C.

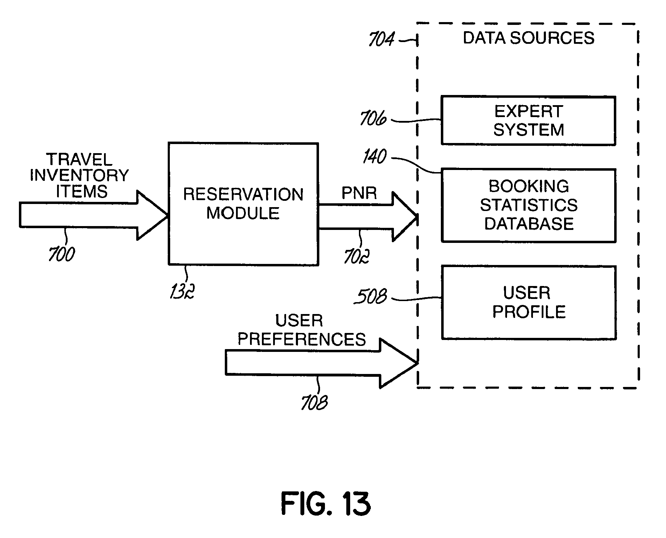

FIG. 13 provides a block diagram that illustrates a booking transaction for a travel recommendation determined consistent with embodiments of the invention. As shown, the reservation module 132 may receive travel inventory items 700 of the travel recommendation for booking. The reservation module 132 generates a passenger name record (i.e., PNR) 702 that includes the booked travel inventory items and traveler information. One or more data sources 704 described herein may be updated based at least in part on the PNR 702, including, for example, an expert system 706 (e.g., an expert recommendation system), the booking statistics database 140, and/or a user profile 508 associated with the traveler. In addition, the data sources 704 may be updated with any user preferences 708 that may have been indicated in the travel request.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for generating at least one travel recommendation, the method comprising:
receiving, at a reservation system, a travel request that includes an origin and location data that indicates at least one location;
analyzing, with the at least one processor of the reservation system, the location data to determine at least one traveling location corresponding to the at least one location indicated by the location data; and
generating, with the at least one processor of the reservation system, the at least one travel recommendation that comprises a travel route including the origin and the at least one traveling location, a determined number of days to stay at the at least one location, and bookable travel inventory items corresponding to the travel route and the determined number of days to stay at the at least one location.

2. The method of claim 1, wherein generating the at least one travel recommendation comprises:
determining the travel route including the origin and the at least one location based at least in part on travel characteristics of the at least one traveling location.

3. The method of claim 2, wherein determining the travel route including the origin and the at least one location is based at least in part on at least one user preference associated with a traveler of the travel request and/or at least one business rule associated with the reservation system.

4. The method of any of claims 1 to 3, wherein analyzing the location data to determine at least one traveling location corresponding to the at least one location indicated by the location data comprises:
determining a plurality of candidate traveling locations corresponding to the at least one location; and
determining a traveling location for the at least one location from the plurality of candidate traveling locations based at least in part on travel characteristics of the plurality of candidate traveling locations.

5. The method of any of claims 1 to 3, wherein the at least one location comprises a plurality of locations, the at least one traveling location comprises a plurality of traveling locations, and analyzing the location data to determine the at least one traveling location corresponding to the at least one location indicated by the location data comprises:
determining a plurality of candidate traveling locations corresponding to the plurality of locations; and
determining the plurality of traveling locations for the plurality of locations from the plurality of candidate traveling locations based at least in part on travel characteristics of the plurality of candidate traveling locations.

6. The method of claim 5, wherein determining the plurality of candidate traveling locations corresponding to the plurality of locations comprises:
sorting the plurality of locations into a plurality of clusters of locations based at least in part on travel characteristics of the plurality of locations; and
determining at least one candidate traveling location of the plurality of traveling locations for each cluster of locations,
wherein a respective traveling location is determined for each cluster of locations from the at least one candidate traveling location for the cluster of locations.

7. The method of claim 6, wherein the plurality of clusters of locations does not exceed the plurality of locations, and the plurality of traveling locations does not exceed the plurality of clusters of locations.

8. The method of any of claims 1 to 7, wherein the bookable travel inventory items of the travel recommendation comprise a travel inventory item for a flight, a travel inventory item for a hotel accommodation, a travel inventory item for a ground travel service, a travel inventory item for a sea travel service, or any combination thereof.

9. The method of any of claims 1 to 8, wherein at least one bookable travel inventory item of the travel recommendation comprises a hotel accommodation that is within a defined distance of a point of interest.

10. The method of any of claims 1 to 9, wherein generating the at least one travel recommendation is based at least in part on booking statistics for travel services maintained by the reservation system, user preferences determined from a third party data source, recommendation data received from a third party data source, calendar data that indicates events for a plurality of locations, a geographic location of at least one point of interest associated with the at least one location, or any combination thereof.

11. The method of any of claims 1 to 10, wherein the location indicated by the location data is determined from geotagged data, text data, calendar data, contact data, or any combination thereof.

12. The method of any of claims 2 to 11, wherein the travel characteristics of the at least one location comprise a geographic distance to at least one other location, a geographic distance to at least one point of interest associated with the at least one location, travel services offered at the at least one traveling location, travel merchants offering services at the at least one traveling location, or any combination thereof.

13. A system for generating at least one travel recommendation, the system comprising:
at least one processor; and
program code configured to be executed by the at least one processor to cause the at least one processor to receive a travel request that includes an origin and location data that indicates at least one location, analyze the location data to determine at least one traveling location corresponding to the at least one location indicated by the location data, and generate the at least one travel recommendation that comprises a travel route including the origin and the at least one traveling location, a determined number of days to stay at the at least one location, and bookable travel inventory items corresponding to the travel route and the determined number of days to stay at the at least one location.

14. The system of claim 13, wherein the program code is further configured to be executed by the at least one processor to cause the at least one processor to perform the methods of any of claims 2 to 12.

15. A computer program product comprising:
a computer readable storage medium; and
program code stored on the computer readable storage medium and configured, upon execution, to cause at least one processor to receive a travel request that includes an origin and location data that indicates at least one location, analyze the location data to determine at least one traveling location corresponding to the at least one location indicated by the location data, and generate at least one travel recommendation that comprises a travel route including the origin and the at least one traveling location, a determined number of days to stay at the at least one location, and bookable travel inventory items corresponding to the travel route and the determined number of days to stay at the at least one location.
